# EUROPEAN PATENT SPECIFICATION

(11) **EP 2 395 886 B1**
(45) Date of publication and mention of the grant of the patent: **08.04.2015**
(21) Application number: 10712478.6
(22) Date of filing: 11.02.2010
(51) Int. Cl.: A47J 31/40

(54) **BEVERAGE VENDING MACHINE**
GETRÄNKEVERKAUFSAUTOMAT
MACHINE DISTRIBUTRICE DE BOISSONS

(30) Priority: 13.02.2009 IT TO20090104
(43) Date of publication of application: 21.12.2011
(73) Proprietor: N&W Global Vending S.p.A., Valbrembo (IT)
(72) Inventor: SIRBU VILLA, Dan, Alexie, I-24040 Bonate Sotto (IT)
(74) Representative: Bergadano, Mirko
(86) International application number: PCT/IB2010/000263
(87) International publication number: WO 2010/092459

(56) References cited:
- US-A- 2 755 000
- US-A- 4 718 579

## Description

### TECHNICAL FIELD

The present invention relates to a beverage vending machine.

More specifically, the present invention relates to a beverage vending machine of the type comprising a cabinet; a supporting surface housed inside the cabinet; at least one container located on the supporting surface and for housing a soluble material; at least one heating device, in turn comprising a heat source connected to the supporting surface and located under the container; and a locking member connected rigidly to the supporting surface to lock the container, in use, to the supporting surface.

### BACKGROUND ART

A vending machine of this type is described, for example, in US-A-2755000.

Not withstanding the heat source, a common drawback of known vending machines of the above type is failure to prevent the steam in the cabinet from binding the soluble material in the container, and so clogging the dispensing device - normally a powered screw - normally located at the bottom of the container.

### DISCLOSURE OF INVENTION

It is an object of the present invention to provide a beverage vending machine designed to eliminate the above drawback in a straightforward, low-cost manner.

According to the present invention, there is provided a beverage vending machine as claimed in Claim 1 and, preferably, in any one of the following Claims depending directly or indirectly on Claim 1.

### BRIEF DESCRIPTION OF THE DRAWINGS

A non-limiting embodiment of the present invention will be described by way of example with reference to the accompanying drawings, in which:
Figure 1 shows a three-quarter top view in perspective, with parts removed for clarity, of a preferred embodiment of the machine according to the present invention;
Figure 2 shows a larger-scale detail of Figure 1, with parts removed for clarity;
Figure 3 shows a larger-scale axial section of a detail in Figure 1;
Figure 4 shows a larger-scale detail of Figure 3;
Figure 5 shows an exploded view in perspective of the Figure 4 detail.

### BEST MODE FOR CARRYING OUT THE INVENTION

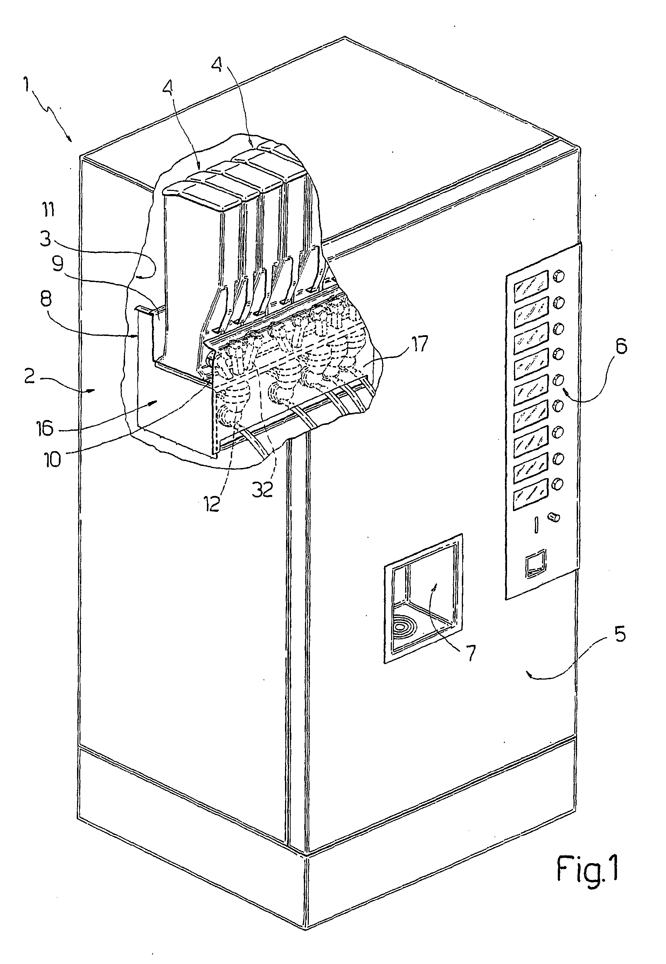

Number 1 in Figure 1 indicates as a whole a beverage vending machine, in particular for hot or cold so-called "instant" beverages made from a measure of soluble material.

Machine 1 comprises a cabinet 2 defining a compartment 3, which houses a number of assemblies 4 for producing respective beverages, and is closed at the front by a door 5 comprising a beverage selection button panel 6, and a dispenser recess 7 from which the user withdraws a cup (not shown) of the selected beverage.

Inside compartment 3, assemblies 4 are fitted to a frame 8 connected rigidly to cabinet 2 and comprising a vertical wall 9 facing a rear wall of cabinet 2; and a horizontal wall 10 perpendicular to and integral with vertical wall 9, and extending from vertical wall 9 towards door 5.

Wall 10 defines a supporting surface for assemblies 4, each of which comprises one or more containers 11 of soluble material; and a known mixer 12 located, with the other mixers 12, under wall 10 and facing door 5.

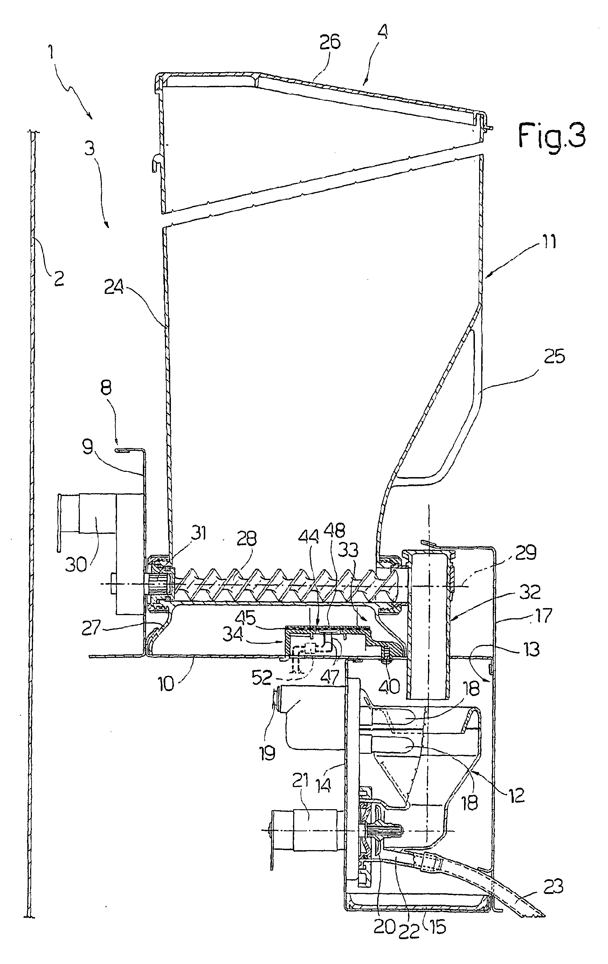

More specifically, and as shown in Figures 1 and 3, mixers 12 are housed side by side inside a cell 13, which is defined by a wall 14 connected rigidly to wall 10 and supporting mixers 12, by a bottom wall 15, and by two lateral walls 16 (only one shown in Figure 1), and has a front opening facing door 5 and fitted with a hatch 17. In one variation, one or each wall 16 may be replaced by the corresponding lateral wall of machine 1.

Each mixer 12 is funnel-shaped, and comprises a top inlet communicating with two pressurized-water inlets 18 connected to the delivery of a pump (not shown), and with a steam suction conduit 19; and a narrow bottom portion, which houses a blending impeller 20 operated, in use, by an electric motor 21 fitted to wall 14, and has a beverage outflow conduit 22 communicating with the outside by a delivery hose 23.

As shown in Figure 3, each container 11 comprises a tank 24 for housing soluble material, has a front handle 25 for easy removal and refill by an operator, and is closed at the top by a removable cover 26, and at the bottom by a cup-shaped base 27 facing downwards and resting on wall 10.

At the bottom of tank 24, container 11 comprises a material dispensing device, in turn comprising a screw 28 coaxial with an axis 29 parallel to wall 10 and perpendicular to wall 9. Screw 28 is operated, in use, by an electric motor 30, which is fitted to wall 9 and comprises an output shaft 31 extending through the lateral wall of container 11 and connected angularly to the rear end of screw 28 by a known fast-fit face coupling.

The opposite free end of screw 28 engages an inlet conduit of a known spout 32 fitted to the lateral wall of container 11 and having an outlet conduit, which extends downwards, perpendicularly to axis 29, through wall 10 to the inlet of relative mixer 12.

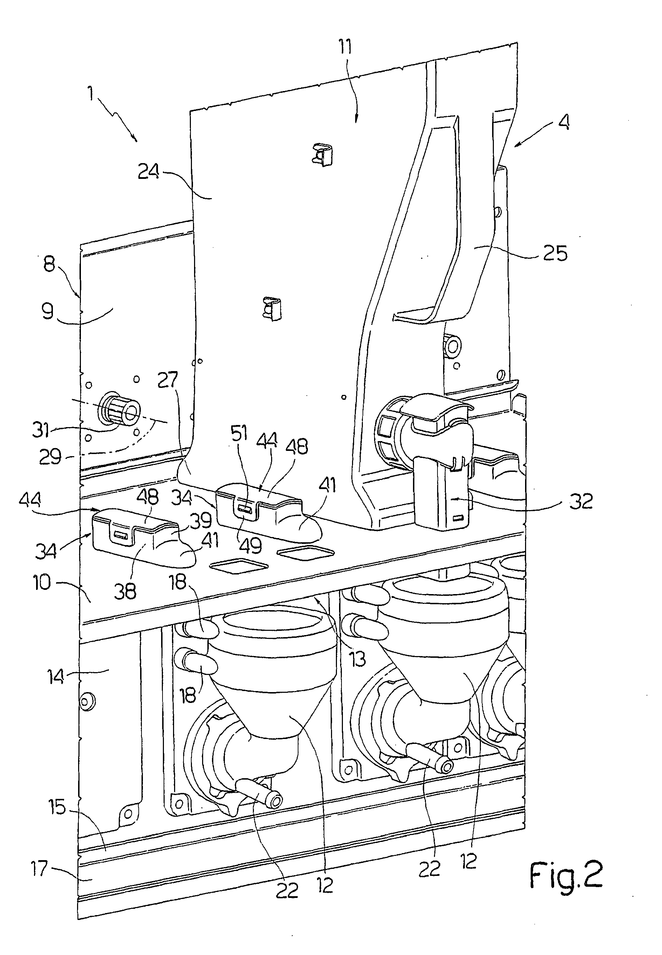

As shown in Figures 2 and 3, to lock containers 11 removably to wall 10, cup-shaped base 27 of each container 11 is shaped internally to define, close to its front, a straight guide 33 parallel to axis 29, and which, when assembling relative container 11, is engaged in sliding manner by a respective locking member which, together with straight guide 33, forms a removable plug-socket coupling and is defined by an elongated body 34 fitted to wall 10 and aligned with output shaft 31 of relative electric motor 30.

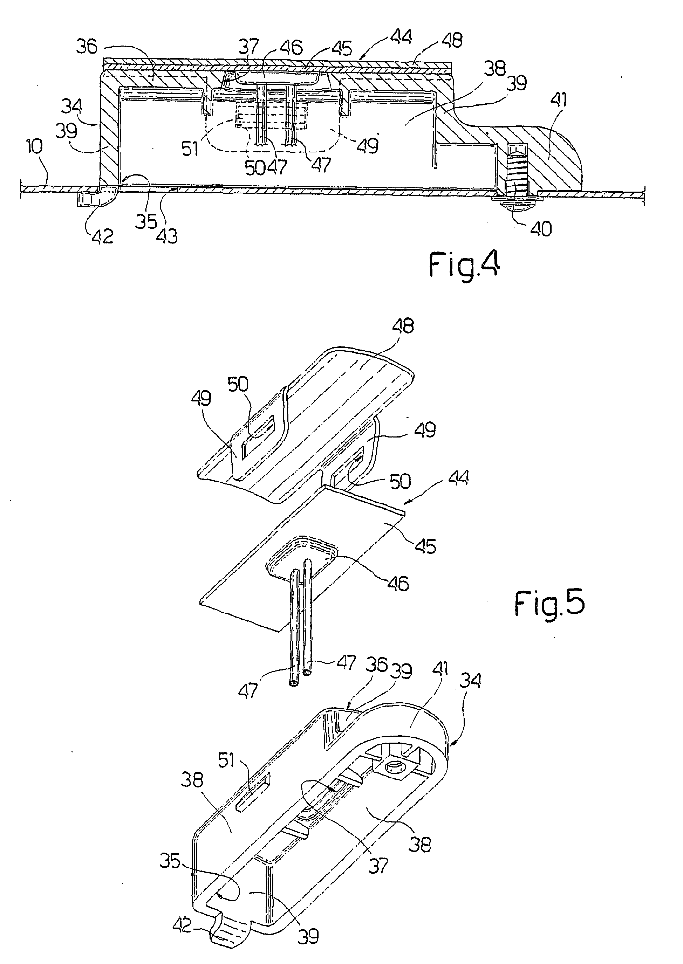

As shown more clearly in Figures 4 and 5, body 34 is in the form of a substantially parallelepiped-shaped shell having a bottom opening 35 and bounded laterally by an outwardly convex top wall 36 with a central through hole 37, by two longitudinal sides 38 parallel to each other and to axis 29, and by two parallel transverse sides 39 perpendicular to longitudinal sides 38. Body 34 is fastened to wall 10 by a screw 40 engaging a threaded hole perpendicular to axis 29 and formed through a rounded appendix 41 projecting axially from the transverse side 39 facing spout 32. In addition to the screw fastener, and to keep body 34 aligned, in use, with output shaft 31 of relative electric motor 30, the free edge of the transverse side 39 opposite appendix 41 has an L-shaped appendix 42 which, when assembling body 34, and before inserting screw 40, is inserted through a hole 43 formed through wall 10, and is positioned resting against a free edge of hole 43, so as to extend towards wall 9 and contact the underside of wall 10.

To prevent the soluble material from binding in the area of each tank 24 surrounding relative screw 28, machine 1 comprises, for each container 11, a heating device 44 incorporated in relative body 34.

As shown in Figures 4 and 5, each heating device 44 comprises a heat source defined by an electric resistor 45 in the form of a rectangular metal sheet, which covers the outer surface of top wall 36 and has a central projection 46, which engages hole 37, and from which project two electric terminals 47.

Resistor 45 is held contacting top wall 36 by a metal plate 48, which forms part of heating device 44, is substantially the same shape and size as top wall 36, and has two wings 49, which project downwards from respective free longitudinal edges of plate 48, and each of which has a slot 50, into which clicks a respective tooth 51 integral with a relative longitudinal side 38 of body 34.

In a preferred embodiment, to stabilize resistor 45 and improve heat transmission between resistor 45 and plate 48, resistor 45 is glued beforehand to the inner surface of plate 48 using heat-conducting glue.

As shown in Figure 3, terminals 47 are connected to an electric circuit of machine 1 by a known connector 52, preferably housed inside body 34.

In one variation, only some of bodies 34 incorporate respective heating devices 44, and the other bodies 34 are each closed at the top by a top wall 36 with no central hole 37.

The advantages of employing bodies 34 incorporating respective heating devices 44 will be clear from the above description. More specifically, an extremely simple, compact, low-cost structure provides for effectively heating containers 11, on account of the heat released by each resistor 45 not only spreading to the area around containers 11, but also concentrating in the area around screw 28, where the soluble material is compacted most, and so has a greater tendency to bind.

## Claims

1. A beverage vending machine comprising a cabinet (2); a supporting surface (10) housed inside the cabinet (2); at least one container (11) located on said supporting surface (10) and for housing a soluble material; at least one heating device (44) in turn comprising a heat source (45) connected to the supporting surface (10) and located under the container (11); and a locking member (34) connected rigidly to the supporting surface (10) to lock the container (11), in use, to the supporting surface (10); the machine being **characterized in that** the container (11) has a hollow base (27); and the locking member (34) comprises a body (34), which supports the heat source (45), projects from the supporting surface (10) towards the container (11), and is engaged by the base (27) of the container (11) to form a removable plug-socket coupling.

2. A machine as claimed in Claim 1, wherein the heat source (45) comprises an electric resistor (45).

3. A machine as claimed in Claim 1, wherein said body (34) has a top wall (36); the heat source (45) comprising an electric resistor (45) defined by a metal sheet on the top wall (36).

4. A machine as claimed in Claim 3, wherein the heating device (44) comprises a metal plate (48) connected firmly to the top wall (36) with the interposition of the electric resistor (45).

5. A machine as claimed in Claim 4, wherein the electric resistor (45) is glued to the metal plate (48).

6. A machine as claimed in one of the foregoing Claims, and comprising a number of containers (11) arranged side by side on the supporting surface (10); and a number of said heating devices (44), each associated with a respective container (11).

## Patentansprüche

1. Getränkeverkaufsautomat, umfassend einen Kasten (2); eine innerhalb des Kastens (2) untergebrachte Auflagefläche (10); mindestens einen Behälter (11), der sich auf der Auflagefläche (10) befindet und zur Unterbringung eines löslichen Materials bestimmt ist; mindestens ein Erwärmungsgerät (44), das wiederum eine Wärmequelle (45) umfasst, die verbunden mit der Auflagefläche (10) und unter dem Behälter (11) befindlich ist; und ein starr mit der Auflagefläche (10) verbundenes Verriegelungselement (34), um den Behälter (11) im Gebrauch an der Auflagefläche (10) zu verriegeln; wobei der Automat **dadurch gekennzeichnet** ist, dass der Behälter (11) eine hohle Basis (27) hat; und das Verriegelungselement (34) einen Körper (34) umfasst, der die Wärmequelle (45) trägt, von der Auflagefläche (10) zu dem Behälter (11) hin hervorsteht und von der Basis (27) des Behälters (11) in Eingriff genommen wird, um eine lösbare Steckverbindung zu bilden.

2. Automat gemäß Anspruch 1, wobei die Wärmequelle (45) einen elektrischen Widerstand (45) umfasst.

3. Automat gemäß Anspruch 1, wobei der Körper (34) eine obere Wand (36) hat; und die Wärmequelle (45) einen durch ein Metallblech auf der oberen Wand (36) definierten elektrischen Widerstand (45) umfasst.

4. Automat gemäß Anspruch 3, wobei das Erwärmungsgerät (44) eine Metallplatte (48) umfasst, die unter Zwischenschaltung des elektrischen Widerstandes (45) fest mit der oberen Wand (36) verbunden ist.

5. Automat gemäß Anspruch 4, wobei der elektrische Widerstand (45) mit der Metallplatte (48) verklebt ist.

6. Automat gemäß irgendeinem der vorhergehenden Ansprüche, und umfassend eine Anzahl von Behältern (11), die nebeneinander auf der Auflagefläche (10) angeordnet sind; sowie eine Anzahl der Erwärmungsgeräte (44), deren jedes einem jeweiligen Behälter (11) zugeordnet ist.

## Revendications

1. Machine distributrice de boissons comprenant une carrosserie (2) ; une surface de support (10) logée à l'intérieur de la carrosserie (2) ; au moins un contenant (11) situé sur ladite surface de support (10) et permettant de loger une matière soluble ; au moins un dispositif chauffant (44) comprenant quant à lui une source de chaleur (45) raccordée à la surface de support (10) et située sous le contenant (11) ; et un organe de blocage (34) fixé de manière rigide à la surface de support (10) pour bloquer le contenant (11), en utilisation, sur la surface de support (10) ; la machine étant **caractérisée en ce que** le contenant (11) comporte une base creuse (27) ; et l'organe de blocage (34) comprend un corps (34), qui supporte la source de chaleur (45), fait saillie de la surface de support (10) vers le contenant (11), et est mis en prise par la base (27) du contenant (11) pour former un couplage mâle-femelle amovible.

2. Machine selon la revendication 1, dans laquelle la source de chaleur (45) comprend une résistance électrique (45).

3. Machine selon la revendication 1, dans laquelle ledit corps (34) comporte une paroi haute (36) ; la source de chaleur (45) comprenant une résistance électrique (45) définie par une tôle métallique sur la paroi haute (36).

4. Machine selon la revendication 3, dans laquelle le dispositif chauffant (44) comprend une plaque métallique (48) raccordée fermement à la paroi haute (36) avec l'interposition de la résistance électrique (45).

5. Machine selon la revendication 4, dans laquelle la résistance électrique (45) est collée à la plaque métallique (48).

6. Machine selon l'une des revendications précédentes, et comprenant un nombre de contenants (11) agencés côte à côte sur la surface de support (10) ; et un nombre desdits dispositifs chauffants (44), chacun étant associé à un contenant (11) respectif.
